# EUROPÄISCHE PATENTSCHRIFT

(11) **EP 1 105 663 B1**
(45) Veröffentlichungstag und Bekanntmachung des Hinweises auf die Patenterteilung: **10.04.2002**
(21) Anmeldenummer: 98942488.2
(22) Anmeldetag: 02.07.1998
(51) Int. Cl.: F16H 61/00

(54) **VERFAHREN ZUM STEUERN DES ANTRIEBSSTRANGS EINES KRAFTFAHRZEUGS UND ANTRIEBSSTRANGSTEUERUNG**
METHOD AND SYSTEM FOR CONTROLLING THE DRIVE TRAIN OF A MOTOR VEHICLE
PROCEDE ET SYSTEME DE REGULATION DE L'ENSEMBLE TRANSMISSION D'UN VEHICULE A MOTEUR

(43) Veröffentlichungstag der Anmeldung: 13.06.2001
(73) Patentinhaber: SIEMENS AKTIENGESELLSCHAFT, 80333 München (DE)
(72) Erfinder: LOHRENZ, Frank, D-93053 Regensburg (DE)
(86) Internationale Anmeldenummer: DE9801832
(87) Internationale Veröffentlichungsnummer: WO0001965

(56) Entgegenhaltungen:
- EP-A- 0 503 948
- EP-A- 0 531 154
- EP-A- 0 532 363
- EP-A- 0 559 255
- DE-A- 4 325 296
- US-A- 5 544 053

## Beschreibung

Die Erfindung betrifft ein Verfahren nach dem Oberbegriff von Patentanspruch 1 und eine Steueranordnung nach dem Oberbegriff von Anspruch 9. Eine solche Steuerung kann in einem Kraftfahrzeug zum Beispiel zum Steuern eines automatischen Getriebes, einer Hinterradlenkung, einer Antriebsschlupfregelung oder eines Fahrgeschwindigkeitsreglers verwendet werden.

Bei bekannten Getriebesteuerungen für Kraftfahrzeuge wird die Übersetzung des Getriebes in Abhängigkeit von der Fahrpedalstellung und von der Fahrgeschwindigkeit anhand von abgespeicherten Kennfeldern automatisch eingestellt. Statt der Fahrpedalstellung im engeren Sinne kann auch das Signal eines sogenannten elektronischen Gaspedals (Kurz: E-Gas) oder eine andere von dem Motormoment, das der Fahrer anfordert, abgeleitete Größe verwendet werden. Dabei werden verschiedene Fahrparameter und Betriebszustände des Kraftfahrzeugs berücksichtigt (WO 95/01051). Die Auswahl des jeweils zu schaltenden Ganges oder - bei stufenlosen Getrieben - der einzustellenden Übersetzung erfolgt durch Steuerschaltungen, die nach den Methoden der Fuzzy-Logik arbeiten. Mit dieser Logik wird Expertenwissen, das durch Erfahrung gewonnen worden ist, in Form einer sogenannten Regelbasis beschrieben, und damit für die Regel- oder Steuervorgänge des Kraftfahrzeug-Getriebes verwendet. Die Fuzzy-Logikschaltung erzeugt Steuersignale, mit denen u.a. die Übersetzung des Getriebes und bei automatischen Stufengetrieben der einzulegende Gang festgelegt wird.

Eine bekannte integrierte Antriebsstrangsteuerung für ein Kraftfahrzeug interpretiert die Stellung des Fahrpedals und des Bremspedals als ein vom Fahrer gewünschtes Radmoment (DE 196 37 210 A1). Sie weist eine Berechnungseinrichtung auf, durch die die Stellungen des Fahrpedals und des Bremspedals empfangen und daraus zentrale Steuerparameter für die Antriebsquellen und die verzögernden Einheiten des Antriebsstrangs erzeugt werden.

Es gibt Fahrsituationen, bei denen eine Betätigung der Bremsen durch den Fahrer zweckmäßigerweise durch den Antriebsstrang des Kraftfahrzeugs unterstützt werden sollte, wie zum Beispiel bei einer Bergabfahrt. Dies kann zum Beispiel dadurch geschehen, daß Hochschaltungen, die durch ein Kennfeld vorgegeben werden, unterdrückt werden, d.h. die jeweils vorliegende Getriebeübersetzung beibehalten wird.

Bei einem bekannten Getriebesteuerungssystem (EP 0 531 154 A2) kann die in Abhängigkeit von der Fahrpedalstellung und der Fahrgeschwindigkeit anhand abgespeicherter Kennfelder bestimmte Getriebeübersetzung korrigiert werden. Hierzu wird durch eine Fuzzy-Einheit abhängig vom Bremswunsch des Fahrers, vom Fahrwiderstand und von der aktuellen Getriebübersetzung ein Korrekturfaktor ermittelt und zum entsprechenden Kennfeldwert addiert.

Der Erfindung liegt die Aufgabe zugrunde, eine Steuerung für eine Einrichtung in einem Kraftfahrzeug zu schaffen, die einen Fahrerbremswunsch erkennt und die gewünschte Bremswirkung feinfühlig und wirksam durch Steuern der Übersetzung des automatischen Getriebes unterstützt.

Diese Aufgabe wird erfindungsgemäß durch ein Verfahren nach Anspruch 1 und eine Steuerung nach Anspruch 9 gelöst. Vorteilhafte Weiterbildungen der Erfindung sind in den Unteransprüchen niedergelegt.

Die Vorteile der Erfindung liegen insbesondere in dem geringen Zusatzaufwand, den sie erfordert. Alle benötigten Schaltungsbestandteile und Sensorsignale sind bei der aus den o.g. Patentanmeldungen bekannten Steuerung bereits vorhanden. Darüber hinaus sind keine zusätzlichen Sensoren erforderlich, es müssen im wesentlichen einige abweichende Fuzzy-Algorithmen verwendet werden. Die Anpassung an den Fahrerbremswunsch kann sehr feinfühlig durchgeführt werden, da sie bei Bedarf mehrstufig erfolgt. Nachdem der Fahrerbremswunsch ausgewertet und die Getriebeübersetzung daran angepaßt verändert worden ist, wird - bei noch vorliegender Aktivierung der Bremse - der Fahrerbremswunsch jeweils erneut ausgewertet und gegebenenfalls die Getriebeübersetzung angepaßt usw.

Ausführungsbeispiele der Erfindung werden im folgenden anhand der Zeichnung erläutert. Es zeigen:
- Figur 1: ein nach dem erfindungsgemäßen Verfahren gesteuertes und mit einer erfindungsgemäßen Antriebsstrangsteuerung versehenes Kraftfahrzeug in schematischer Darstellung;
- Figur 2: ein Struktogramm zur Erläuterung des erfindungsgemäβen Verfahrens,
- Figur 3: ein Diagramm, das den zeitlichen Verlauf der gemessenen Bremszeiten des Kraftfahrzeugs wiedergibt;
- Figur 4: ein Diagramm, das den zeitlichen Verlauf der Bremsverzögerungen des Kraftfahrzeugs wiedergibt, und
- Figur 5: ein Ablaufdiagramm des bei dem erfindungsgemäßen Verfahren abgearbeiteten Programms.

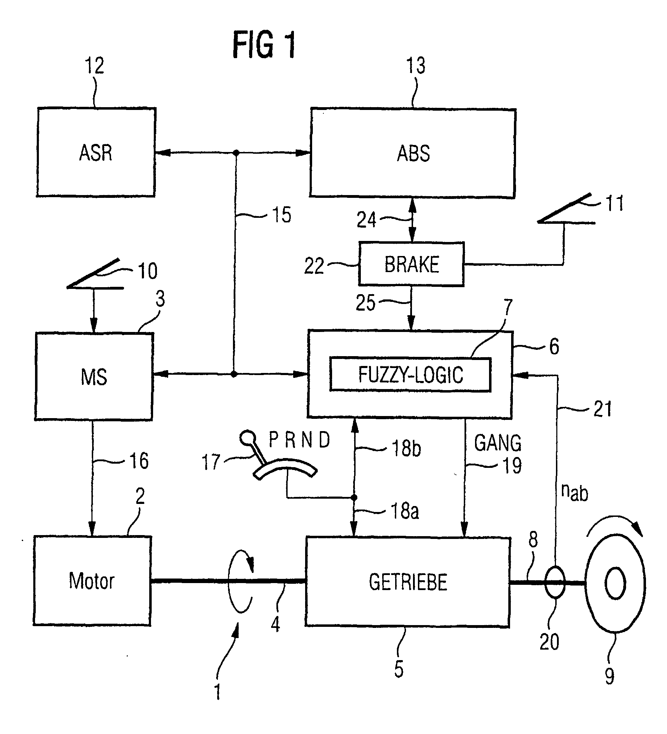

Ein schematisch dargestelltes Kraftfahrzeug 1 (Figur 1) weist einen Motor 2 auf, der von einer Motorsteuerung 3 gesteuert wird. Eine Motorausgangswelle 4 ist über einen - hier nicht getrennt dargestellten - Drehmomentwandler oder hydrodynamische Kupplung mit einem automatischen Getriebe 5 verbunden, das von einer erfindungsgemäßen elektronischen Antriebsstrangs- oder Getriebesteuerung 6 - im folgenden auch einfach als Steuerung bezeichnet - gesteuert wird. In dem Ausführungsbeispiel ist das Getriebe 5 als Stufengetriebe ausgeführt, eine erfindungsgemäße Steuerung 6 läßt sich aber genauso gut für ein stufenloses Getriebe - oder zum Steuern der weiteren eingangs genannten Einrichtungen in einem Kraftfahrzeug - verwenden. Die Steuerung 6 enthält als wesentlichen Bestandteil eine Fuzzy-Logikschaltung 7. Eine Getriebeabtriebswelle 8 ist mit der angetriebenen Achse des Kraftfahrzeugs verbunden, die hier durch ein angetriebenes Rad 9 symbolisiert wird.

Über ein Fahrpedal 10 gibt der Fahrer des Kraftfahrzeugs seinen Befehle - genau genommen sind es seine Wünsche - an die Motorsteuerung 3. Bei Betätigung eines Bremspedals 11 werden die Bremsen des Kraftfahrzeugs, die hier durch eine Bremsanlage 22 schematisch dargestellt sind, betätigt. Das Kraftfahrzeug ist außerdem mit einer Radschlupf- oder Antriebsschlupfregelung (ASR) 12 und einem Antiblockiersystem (ABS) 13 versehen, die durch Signalleitungen oder einen Bus 15 untereinander sowie mit der Motorsteuerung 3 und der Getriebesteuerung 6 zwecks Austausch von Signalen verbunden sind. Über eine Signalleitung 16 sendet die Motorsteuerung 3 an den Motor 2 Signale, mit denen die Zündung, die Einspritzung und die Drosselklappe gesteuert werden (letztere nur, wenn eine entsprechende Steuereinrichtung vorhanden ist).

Über einen Wählhebel 17 bestimmt der Fahrer in üblicher Weise den Fahrbereich des automatischen Getriebes 5. Die Wählhebelsignale gelangen über eine mechanische Verbindung 18a zu dem Getriebe 5 und über eine elektrische Signalleitung 18b zu der Steuerung 6. Die Steuerung 6 sendet über eine Signalleitung 19 Steuersignale an das Getriebe 5, die den jeweiligen Getriebegang festlegen und die erforderlichen Schaltvorgänge steuern, oder - bei einem stufenlosen Getriebe - die jeweilige Übersetzung einstellen.

Die Drehzahl der Getriebeabtriebswelle 8 wird von einem Drehzahlsensor 20 über eine Signalleitung 21 an die Steuerung 6 gemeldet. Zumindest die Signalleitungen 15, die die Steuergeräte 3, 6, 12 und 13 miteinander verbinden, können aus einzelnen Signalleitungen oder aus einem bidirektionalen Bus, z.B. aus einem bekannten CAN- oder LAN-Bus, bestehen. Die Steuergeräte und -systeme 3, 12 und 13 müssen nicht unbedingt vorhanden sein. Falls sie es aber sind, ist es von Vorteil, wenn die Getriebesteuerung 6 auf die von ihnen gelieferten Sensorsignale (z.B. für die Raddrehzahlen) und davon abgeleitete Größen zugreifen kann.

Die Bremsen 22 werden auch durch das ABS-System 13, wenn es aktiv ist, gesteuert. Sie sind mit ihm über eine bidirektionale Signalleitung 24 verbunden, über die Steuer- und Zustandssignale übertragen werden. Der Betriebszustand der Bremsen 22, und damit auch der durch Betätigen der Bremspedals 11 geäußerte Fahrerbremswunsch, werden über eine weitere Signalleitung 25 der Steuerung 6 und der Fuzzy-Logikschaltung 7 mitgeteilt. In der Fuzzy-Logikschaltung werden - wie zum Beispiel in der WO 97/01051 beschrieben - Zugehörigkeitsfunktionen verarbeitet.

Der aus dem Motor 2, dem automatischen Getriebe 5 und einigen weiteren hier - da für sich bekannt und für die Erfindung nicht notwendig - nicht dargestellten Bestandteilen, wie die eine hydrodynamische Kupplung und eines oder mehrere Differentiale, bestehende Antriebsstrang des Kraftfahrzeugs wird bekanntlich derart gesteuert, daß die Übersetzung des automatischen Getriebes in Abhängigkeit zumindest von der Stellung des Fahrpedals 10 und der Geschwindigkeit des Kraftfahrzeugs anhand von Kennfeldern, die in der Getriebesteuerung 6 gespeichert sind, automatisch festgelegt wird. Die Fuzzy-Logikschaltung 7 wertet verschiedene, Fahrzustände und den Lastzustand des Kraftfahrzeugs charakterisierende Signale aus und erzeugt daraufhin Steuersignale, durch die die Getriebeübersetzung festgelegt wird.

Gemäß der vorliegenden Erfindung bewertet oder analysiert die Fuzzy-Logikschaltung 7 einen Bremsmomentwunsch oder Fahrzeugverzögerungswunsch des Fahrers des Kraftfahrzeugs - der durch Betätigen des Bremspedals 11 geäußert wird - und führt eine die Bremswirkung der Bremsanlage 22 unterstützende Änderung der Getriebeübersetzung durch. Nach dem Ändern der Getriebeübersetzung bewertet die Fuzzy-Logikschaltung 7 den Bremsmomentwunsch des Fahrers erneut und paßt entsprechend dem Bewertungsergebnis die Getriebeübersetzung gegebenenfalls erneut an den Bremsmomentwunsch des Fahrers erneut an, indem sie die Getriebeübersetzung wiederum ändert. Dies wird so lange wiederholt, bis die gewünschte Bremswirkung erreicht worden ist.

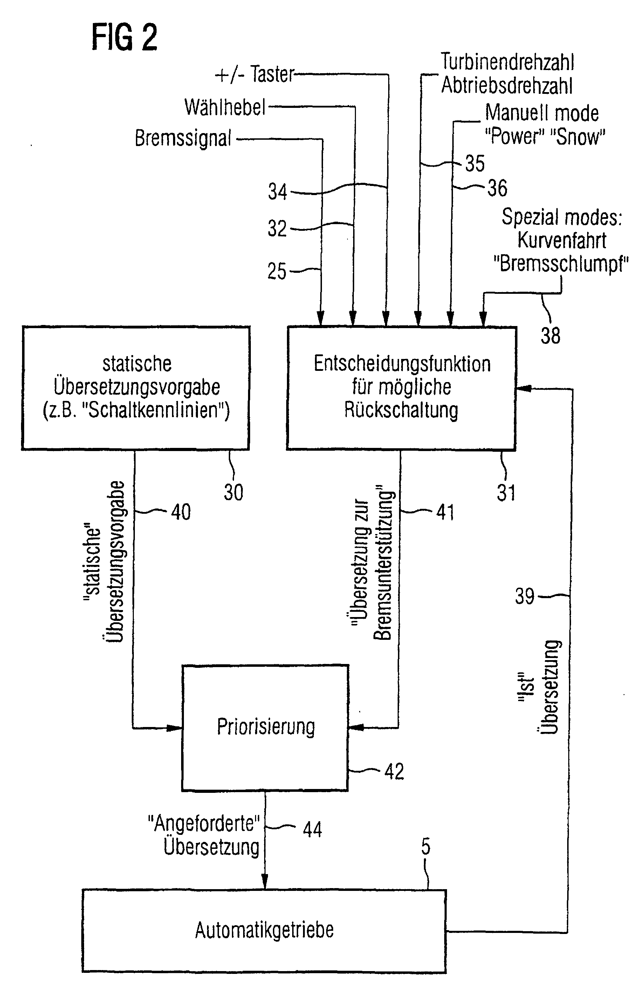

Das vorstehend erwähnte Verfahren zum Steuern des Antriebsstrangs eines Kraftfahrzeugs und die Wirkungsweise der zugehörigen Steuerung wird nun anhand der Figuren 2 bis 5 eingehend erläutert. Ein Block oder Stufe 30 (Figur 2) stellt die "statische Übersetzungsvorgabe" dar, d. h. die übliche Festlegung der Übersetzung des Getriebes 5 mit Schaltkennlinien, die in einem oder mehreren Schaltkennfeldern oder Kennfeldspeichern der Steuerung 6 abgelegt sind.

Ein Block oder Stufe 31 stellt die den Kern der Erfindung bildende "Entscheidungsfunktion für eine mögliche Rückschaltung" dar. Dieser Block empfängt über eine (Signal-)Leitung 35 das den Bremsmomentwunsch wiedergebende Bremssignal, über eine Leitung 32 die Signale des Wählhebels 17 und über eine Leitung 34 die Signale eines ±-Tasters, mit dem der Fahrer die Getriebeübersetzung jeweils um eine Stufe herauf- oder herabsetzen kann. Über eine Leitung 35 empfängt der Block 31 Sensorsignale, die die Turbinendrehzahl oder die Abtriebsdrehzahl des Getriebes 5 wiedergeben. Über eine Leitung 36 empfängt er Signale, mit denen der Fahrer manuell besondere Schaltkennfelder auswählen kann, z. B. in einem "Power"-Modus ein leistungsorientiertes Kennfeld und in einem "Snow"-Modus ein Kennfeld, das zum vorsichtigen Fahren bei winterlichen Straßenverhältnissen vorgesehen ist.

Über eine Leitung 38 empfängt der Block 31 Signale, die spezielle Fahrzustände charakterisieren, z. B. daß das Kraftfahrzeug eine Kurve durchfährt oder daß ein Bremsschlupf auftritt, der von dem ABS-System 13 signalisiert wird. Über eine Signalleitung 39 empfängt er von dem Automatikgetriebe 5 die in diesem vorliegende Ist-Übersetzung.

Der Block 30 ist über eine Leitung 40 und der Block 31 über eine Leitung 41 mit einem Block oder Priorisierungsstufe 42 verbunden, in dem eine Priorisierung oder Auswahlfunktion durchgeführt wird. Die statische Übersetzungsvorgabe, d. h. die Festlegung der Übersetzung anhand von Kennfeldern und die erfindungsgemäße, "dynamische" Entscheidungsfunktion, mit der die Getriebeübersetzung in Anpassung an den Bremsmomentwunsch des Fahrers festgelegt wird, erfolgen parallel. Bei der Entscheidungsfunktion wird nicht der statisch vorgegebene Gang (oder Getriebeübersetzung) als Ausgangsgröße oder Referenz verwendet, sondern es wird jede neue Gangstufe auf der Grundlage des tatsächlich in dem Automatikgetriebe 5 physikalisch vorliegenden Übersetzungsverhältnisses ermittelt. Ergeben die statische Gangvorgabe durch den Block 30 und die zur Erhöhung der Bremsleistung in dem Block 31 vorgeschlagene Übersetzungswahl unterschiedliche Werte für die Getriebeübersetzung, so wird in dem Block 42 eine Priorisierung oder Auswahl durchgeführt, die abhängig von vorgegebenen Bedingungen ein resultierendes Übersetzungsverhältnis auswählt und über eine Leitung 44 an das Automatikgetriebe 5, insbesondere an eine in diesem enthaltene Schaltungsablaufsteuerung, übermittelt.

Ergibt die kennfeldbasierte oder statische Gangberechnung ein größeres Übersetzungsverhältnis - das einem kleineren Gang entspricht -, wird dieses größere Übersetzungsverhältnis in dem Getriebe 5 eingestellt. Das heißt, daß in diesem Fall das statisch berechnete Übersetzungsverhältnis priorisiert ist. Um eine kennfeldunabhängige Änderung der Übersetzung zu aktivieren, müssen vorgegebene Eingangsbedingungen erfüllt sein. Bei der Deaktivierung einer solchen Übersetzungsänderung müssen ebenfalls vorgegebene Ausgangsbedingungen erfüllt sein.

Der Bremsmomentwunsch des Fahrers wird entweder aus direkt gemessenen Größen der Bremsanlage 22 oder aus abgeleiteten Systemgrößen ermittelt. Eine direkt gemessene Systemgröße ist zum Beispiel der von dem Fahrer erzeugte Bremsdruck. Sind an dem Bremspedal geeignete Sensoren vorhanden, so können als gemessene Größen auch die Verstellgeschwindigkeit und die Stellung des Bremspedals 11 verwendet werden, um die Bremsintensität zu erkennen oder berechnen.

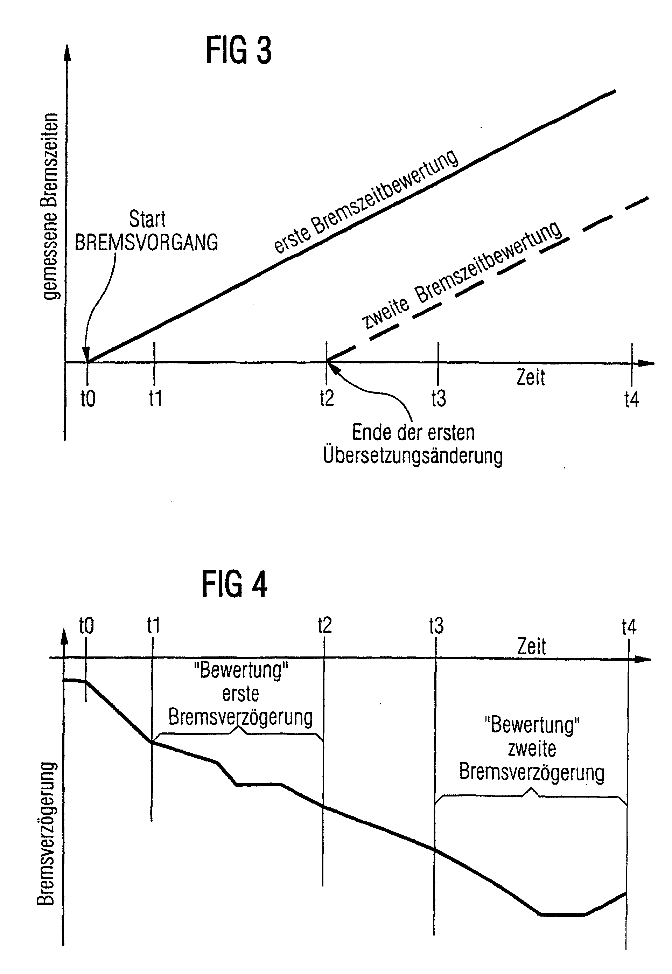

Die Bewertung und Berechnung eines Bremsmomentwunsches des Fahrers erfolgt erst nach Ablauf einer vorgegebenen Zeitspanne ab dem Beginn des Bremsvorgangs. Beginnt der Bremsvorgang zu dem Zeitpunkt t0 (Figur 3 und Figur 4), so beginnt die Bewertung einer ersten Bremsverzögerung zu einem Zeitpunkt t1. Zu einem Zeitpunkt t2 ist die erste Übersetzungsänderung beendet. Zu diesem Zeitpunkt beginnt, falls die Bremse weiterhin betätigt wird, die Messung einer zweiten Bremszeit. Die entsprechende zweite Bewertung der Bremsverzögerung beginnt auch hier erst nach einer vorgegebenen Zeitspanne t3-t2 und sie endet zu einem Zeitpunkt t4. Wird nach dem Zeitpunkt t4 die Bremse weiterhin betätigt, so erfolgt nach Ablauf einer vorgegebenen Zeitspanne erneut eine weitere, dritte Bewertung der Bremsverzögerung. Dieser Vorgang setzt sich, wie bereits erwähnt, fort, bis die erforderliche Bremsunterstützung mit Hilfe des automatischen Getriebes 5 erreicht worden ist.

Die Bremsaktivität wird nur dann bewertet, d.h. die Bremszeit und die Bremsintensität werden nur zu Zeiten bestimmt, bei denen der Fahrer die Bremsanlage 22 betätigt, d.h. die Bewertungsgrößen (z.B. die Bremszeit) werden auf null oder ihren Ausgangswert zurückgesetzt. Auch beim Freigeben der Bremse kann eine Zeitspanne vorgesehen werden, bevor der Bremsvorgang als abgeschlossen gilt.

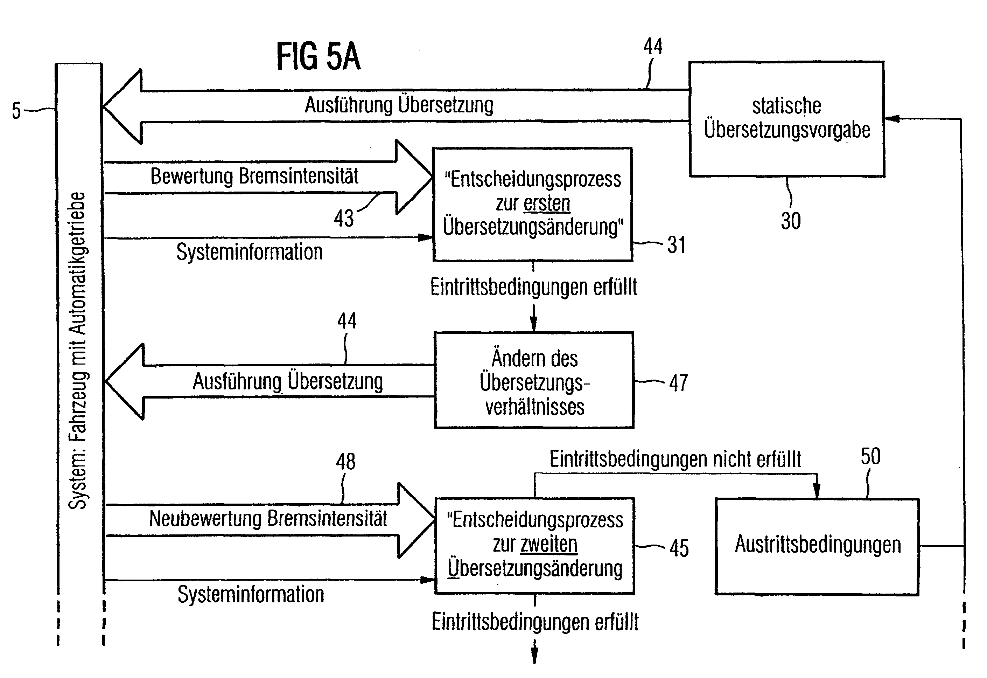

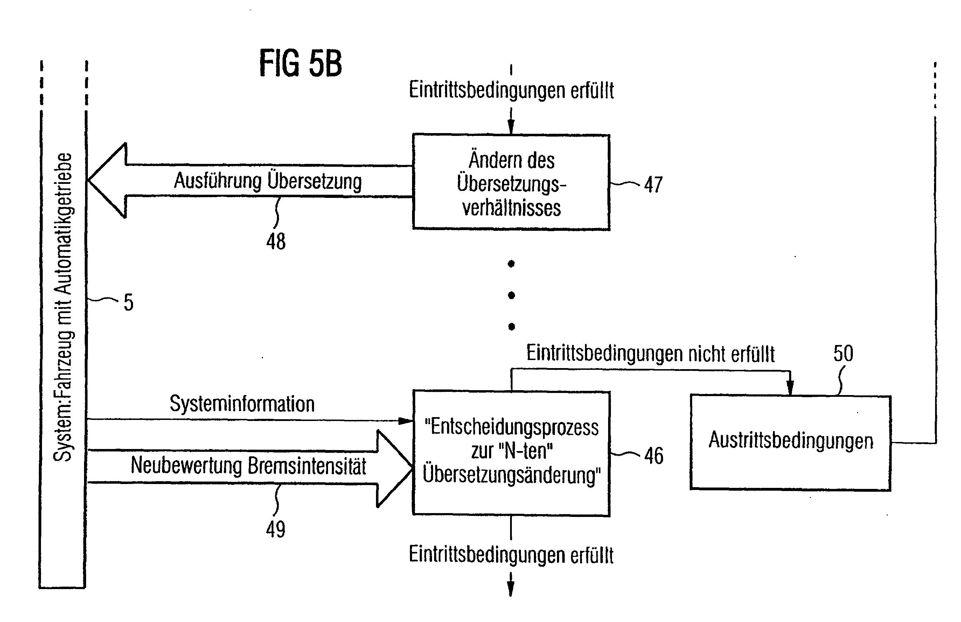

In dem Ablaufdiagramm von Figur 5 sind mehrere Entscheidungs-Blöcke oder -Stufen dargestellt und zwar eine erste Entscheidungsstufe 31, eine zweite Entscheidungsstufe 45 und eine N-te Entscheidungsstufe 46 dargestellt. Die Bewertungs- und Berechnungsalgorithmen, die die Fuzzy-Logikschaltung 7 in diesen Entscheidungsstufen abarbeitet, sind die gleichen.

Für die einzelne Entscheidungsstufe, in der jeweils über eine nächste Übersetzungsänderung zur Bremsunterstützung entschieden wird, werden aber unabhängige Größen zum Bestimmen der gewünschten Bremsintensität bewältigt. D.h. nach jeder Übersetzungsänderung zur Bremsunterstützung erfolgt eine Neubewertung der Bremsaktivität mit eigenen Werten der Bremsintensität. Diese jeweilige Neubewertung ist durch die eine Datenübernahme charakterisierenden Pfeile 43, 48 und 49 dargestellt. Wenn in dem Entscheidungsblock 45 für die zweite Übersetzungsänderung festgestellt wird, daß die Eintrittsbedingungen für eine (weitere) Änderung der Übersetzung zur Bremsunterstützung nicht erfüllt sind, werden in einem Block 50 die Austrittsbedingungen geprüft. Liegen sie vor, erfolgt ein Rücksprung zu dem Block 30 und somit zu einer Festlegung der Übersetzung aufgrund von Kennfeldern.

Bei dem Ablauf diagramm von Figur 5 ist der Priorisierungs-Block 42 nicht eingezeichnet, um die Darstellung nicht unübersichtlich werden zu lassen. Die statische Übersetzungsvorgabe 30 und Übersetzungsänderung-Blöcke oder -Stufen 47, die die jeweils entschiedene Änderung der Übersetzung ausführen, sind durch die Leitungen 44 direkt mit dem automatischen Getriebe 5 verbunden.

Bei der Entscheidung über eine mögliche Übersetzungsänderung werden zusätzlich eine Fahrerklassifizierung und der Lastzustand des Kraftfahrzeuges, die von der Fuzzy-Logikschaltung 7 in bekannter Weise ermittelt worden sind, berücksichtigt. Die Fahrerklassifizierung kann dabei indirekt über ein selektiertes Fahrerprogramm oder direkt über eine den Fahrer charakterisierende Kenngröße ("Fahrerwert") erfolgen. Der Lastzustand kann durch einen berechneten und abgeleiteten Lastwert oder über eine den Lastzustand charakterisierende Größe (zum Beispiel ein Differenzmoment) bestimmt werden.

Die Abarbeitung sämtlicher Zustandsgrößen erfolgt in der Fuzzy-Logikschaltung 7, die ihrerseits ein Steuersignal erzeugt, das die Übersetzungsänderung veranlaßt. Um dieses Steuersignal zu erzeugen, können auch mehrere Fuzzy-Systeme mit unterschiedlicher Auslegung verwendet werden. Die Auswahl des jeweiligen Systems erfolgt dann abhängig von dem jeweils ausgewählten adaptierten Fahrprogramm. Es können auch Fuzzy-Systeme verwendet werden, die abhängig von dem manuell vorgegebenen Fahrprogramm (für Sport- oder Winterbetrieb) selektiert werden.

Das von der Fuzzy-Logikschaltung 7 erzeugte Steuersignal wird als Drehzahlschwelle für die Turbinendrehzahl des automatischen Getriebes 5 verwendet und mit dieser verglichen. Liegt die Turbinendrehzahl unter dem Wert des Steuersignals, wird von dem Block 31 ein Vorschlag zur Änderung der Getriebeübersetzung an die Priorisierungsstufe 42 übertragen. Anstelle der Turbinendrehzahl kann auch die Getriebeabtriebsdrehzahl für diesen Vergleich verwendet werden.

Stellt die Getriebesteuerung 6 sicherheitskritische Systemfehler, z.B. den Ausfall eines Drehzahlsensorsignals, fest, die eine eindeutige Entscheidung für eine Übersetzungsänderung nicht zulassen, so wird die Übersetzungsänderung nicht durchgeführt. Es wird die statische Übersetzungsvorgabe nach Kennfeld priorisiert.

Bei bestimmten sicherheitskritischen Fahrzuständen, wie z.B. bei Kurvenfahrt, auftretendem Bremsschlupf, glatter Fahrbahnoberfläche usw. werden zur Bremsunterstützung angeforderte Änderungen der Getriebeübersetzung unterdrückt. Manuelle Eingriffe des Fahrers über den Wählhebel 17 oder eine manuelle Gangvorgabe durch einen Taster 34 (sogenannte Tiptronik-Funktion) werden als direkter Fahrerwunsch interpretiert und damit höher priorisiert. Dadurch kann eine angeforderte Übersetzungsänderung unterdrückt oder eine bereits durchgeführte Übersetzungsänderung rückgängig gemacht werden.

Ist eine Übersetzungsänderung zur Bremsunterstützung durchgeführt worden, sind folgende Alternativen möglich:
- Halten des aktiven Übersetzungsverhältnisses
- Ändern des Übersetzungsverhältnisses in den von dem Kennfeld vorgegebenen statischen Wert
- Ändern des Übersetzungsverhältnisses zum Zwecke der weitergehenden Bremsunterstützung.

Eine weitere Übersetzungsänderung in Richtung einer höheren Übersetzung (entspricht einem weiteren Rückschalten) erfolgt dann, wenn die Eintrittsbedingungen bei neu bewerteter Bremsverzögerung wiederum erfüllt sind.

Das aktive Übersetzungsverhältnis bleibt solange aufrecht erhalten, bis die Austrittsbedingungen erfüllt sind. Um die Austrittsbedingungen überprüfen zu können, dürfen die Eintrittsbedingungen nicht mehr erfüllt sein. Dies kann zum Beispiel durch Überschreiten des von der Fuzzy-Logikschaltung 7 erzeugten Steuersignals durch die Turbinendrehzahl erfolgen, oder bei einer Beendigung des Bremsvorgangs.

Wenn die Eintrittsbedingungen nicht mehr erfüllt sind, erfolgt somit eine Überprüfung der Austrittsbedingungen. Dazu wird der Beschleunigungszustand des Kraftfahrzeugs als Eingangsgröße herangezogen. Abhängig von dem jeweiligen Beschleunigungsniveau (bei positiver Beschleunigung) ergeben sich folgende Alternativen:
- Kleines positives oder negatives Beschleunigungsniveau → das Übersetzungsverhältnis wird gehalten.
- Mittleres positives Beschleunigungsniveau → das Fahrzeug muß über eine vorgegebene Strecke oder während einer definierten Zeitdauer dieses Beschleunigungsniveau halten, danach wird das Übersetzungsverhältnis freigegeben, d.h. ein statisch oder kennfeldbasiert bestimmtes Übersetzungsverhältnis übernommen.
- Großes positives Beschleunigungsniveau → das Übersetzungsverhältnis wird freigegeben, d.h. das statische Übersetzungsverhältnis übernommen.

Beim Verlassen des eingestellten Übersetzungsverhältnisses werden zusätzliche Betriebszustände berücksichtigt, wie z.B. ein "fast-off"-Zustand, bei dem das Fahrpedal plötzlich freigegeben wird. Dadurch wird im Falle eines "instabilen" Fahrpedals kein kleineres Übersetzungsverhältnis eingestellt. Ein solches instabiles Fahrpedal ist zum Beispiel dann gegeben, wenn der Fahrer mit dem Fahrpedal spielt.

## Patentansprüche

1. Verfahren zum Steuern des Antriebsstrangs eines Kraftfahrzeugs,
- bei dem die Übersetzung eines automatischen Getriebes in Abhängigkeit zumindest von der Fahrpedastellung oder einer diese ersetzende Größe und der von Geschwindigkeit des Kraftfahrzeugs anhand von abgespeicherten Kennfeldern automatisch festgelegt wird, und
- bei dem eine Fuzzy-Logikschaltung (7) den Fahrzustand des Kraftfahrzeugs charakterisierende Signale auswertet und daraufhin Steuersignale erzeugt, durch die die Getriebeübersetzung festgelegt wird, **dadurch gekennzeichnet,**
- **daß** die Fuzzy-Logikschaltung (23) einen Bremsmomentwunsch des Fahrers des Kraftfahrzeugs bewertet und eine das Bremsmoment der Bremsanlage (22) unterstützende Änderung der Getriebeübersetzung durchführt,
- **daß** die Fuzzy-Logikschaltung (7) nach dem Ändern der Getriebeübersetzung den Bremsmomentwunsch des Fahrers erneut bewertet und gemäß dem Bewertungsergebnis die Getriebeübersetzung gegebenenfalls erneut an den Bremsmomentwunsch anpaßt, und
- **daß** ein Bremsmomentwunsch des Fahrers des Kraftfahrzeugs erst bewertet wird, nachdem das Bremspedal (11) eine vorgegebene Zeitspanne lang betätigt worden ist.

2. Verfahren nach Anspruch 1, **dadurch gekennzeichnet, daß** die Fuzzy-Logikschaltung (7) nach dem erneuten Ändern der Getriebeübersetzung den Bremsmomentwunsch des Fahrers wieder bewertet und die Getriebeübersetzung schrittweise ändert, bis das geforderte Bremsmoment erreicht worden ist.

3. Verfahren nach einem der vorhergehenden Ansprüche, **dadurch gekennzeichnet, daß** die Fuzzy-Logikschaltung die die Bremsleistung unterstützende Getriebeübersetzung parallel zu einer kennfeldbasierten Berechnung der Getriebeübersetzung ermittelt, und daß sie die tatsächlich im Getriebe vorliegende Übersetzung zum Berechnen der Übersetzungsänderung verwendet.

4. Verfahren nach einem der Ansprüche 1 oder 2, **dadurch gekennzeichnet, daß** die Fuzzy-Logikschaltung die das Bremsmoment unterstützende Getriebeübersetzung parallel zu einer kennfeldbasierten Berechnung der Getriebeübersetzung ermittelt, und daß sie die statisch ermittelte Getriebeübersetzung einstellt, wenn diese ein größeres Übersetzungsverhältnis ergibt.

5. Verfahren nach einem der vorhergehenden Ansprüche, **dadurch gekennzeichnet, daß** die Fuzzy-Logikschaltung den Bremsmomentwunsch des Fahrers aus abgeleiteten Fahrzustandsgrößen des Kraftfahrzeugs berechnet.

6. Verfahren nach einem der vorhergehenden Ansprüche, **dadurch gekennzeichnet,**
- **daß** von der Fuzzy-Logikschaltung ein Steuersignal erzeugt und als Drehzahlschwelle für einen Vergleich mit der Turbinendrehzahl des automatischen Getriebes verwendet wird, und
- **daß** bei unter diese Drehzahlschwelle sinkender Turbinendrehzahl eine die Bremswirkung unterstützende Änderung der Getriebeübersetzung veranlaßt wird.

7. Verfahren nach einem der Ansprüche 1 bis 5, **dadurch gekennzeichnet,**
- **daß** von der Fuzzy-Logikschaltung ein Steuersignal erzeugt und als Drehzahlschwelle für einen Vergleich mit der Abtriebsdrhezahl des automatischen Getriebes verwendet wird, und
- **daß** bei unter diese Drehzahlschwelle sinkender Abtriebsdrehzahl eine die Bremswirkung unterstützende Änderung der Getriebeübersetzung veranlaßt wird.

8. Verfahren nach einem der vorhergehenden Ansprüche, **dadurch gekennzeichnet, daß** das das Bremsmoment unterstützende Übersetzungsverhältnis solange aufrecht erhalten bleibt, bis vorgegebene Austrittsbedingungen erfüllt sind.

9. Antriebsstrangsteuerung eines Kraftfahrzeugs, durch die die Übersetzung eines automatischen Getriebes (5) in Abhängigkeit zumindest von der Fahrpedalstellung und der Fahrzeuggeschwindigkeit anhand von abgespeicherten Kennfeldern automatisch festgelegt wird, und die eine Fuzzy-Logikschaltung (7) aufweist, durch die verschiedene, Fahrzustände und den Lastzustand des Kraftfahrzeugs charakterisierende Signale ausgewertet und daraufhin Steuersignale erzeugt werden, mit denen die Getriebeübersetzung festgelegt wird, **dadurch gekennzeichnet,**
- **daß** die Fuzzy-Logikschaltung (7) durch eine Signalleitung (25) mit einer Bremsanlage (22) des Kraftfahrzeugs verbunden ist, und
- **daß** durch die Fuzzy-Logikschaltung (7) ein von der Bremsanlage (22) übermittelter Bremsmomentwunsch des Fahrers ausgewertet und eine die Bremswirkung der Bremsanlage (22) unterstützende Änderung der Getriebeübersetzung durchgeführt wird, nachdem das Bremspedal (11) eine vorgegebene Zeitspanne lang betätigt worden ist.

## Claims

1. Method for controlling the power train of a motor vehicle,
- in which the gear ratio of an automatic transmission is specified automatically as a function at least of the accelerator pedal position or some value which replaces it and of the speed of the vehicle, on the basis of stored characteristic maps, and
- in which a fuzzy logic circuit (7) evaluates signals which characterise the driving state of the motor vehicle and then generates control signals by which the transmission ratio is specified, **characterised in that**
- the fuzzy logic circuit (23) evaluates the braking torque wish of the driver of the vehicle and carries out a change in the transmission ratio which supports the braking torque of the brake system (22),
- after the transmission ratio has been changed the fuzzy logic circuit (7) again evaluates the braking torque wish of the driver, and according to the outcome of the evaluation again adapts the transmission ratio to the braking torque wish, and
- a braking torque wish of the driver of the vehicle is not evaluated until after the brake pedal (11) has been applied for a specified length of time.

2. Method according to Claim 1, **characterised in that** the fuzzy logic circuit (7) again evaluates the braking torque wish of the driver after the transmission ratio has again been changed, and changes the transmission ratio step-by-step until the desired braking torque has been reached.

3. Method according to one of the preceding claims, **characterised in that** the fuzzy logic circuit determines the transmission ratio to support the braking power simultaneously with a characteristic-map-based calculation of the transmission ratio, and that it uses the gear ratio actually present in the transmission to calculate the change in gear ratio.

4. Method according to one of the Claims 1 or 2, **characterised in that** the fuzzy logic circuit determines the transmission ratio to support the braking torque simultaneously with a characteristic-map-based calculation of the transmission ratio, and that it sets the statically determined gear ratio if this results in a greater transmission ratio.

5. Method according to one of the preceding claims, **characterised in that** the fuzzy logic circuit calculates the braking torque wish of the driver from derived driving state values of the vehicle.

6. Method according to one of the preceding claims, **characterised in that**
- a control signal is generated by the fuzzy logic circuit and is used as the rotational speed threshold for a comparison with the turbine speed of the automatic transmission, and that
- when the turbine speed falls below this rotational speed threshold a change in the transmission ratio to support the braking effect is initiated.

7. Method according to one of the claims 1 to 5, **characterised in that**
- a control signal is generated by the fuzzy logic circuit and is used as a rotational speed threshold for a comparison with the output speed of the automatic transmission, and
- when the output speed falls below this rotational speed threshold a change in the transmission ratio to support the braking effect is initiated.

8. Method according to one of the preceding claims, **characterised in that** the transmission ratio which supports the braking torque is maintained until specified exit conditions are fulfilled.

9. Power train control system for a motor vehicle, whereby the gear ratio of an automatic transmission (5) is specified automatically as a function at least of the accelerator pedal position and the vehicle speed, on the basis of stored characteristic maps, and having a fuzzy logic circuit (7) by which the various signals which characterise the driving states and the load condition of the vehicle are evaluated and control signals are then generated with which the transmission ratio is specified, **characterised in that**
- the fuzzy logic circuit (7) is connected to a brake system (22) of the motor vehicle through a signal line (25), and that
- a braking torque wish of the driver conveyed by the brake system (22) is evaluated by the fuzzy logic circuit (7), and a change in the transmission ratio which supports the braking effect of the brake system (22) is carried out after the brake pedal (11) has been applied for a specified length of time.

## Revendications

1. Procédé de commande de la ligne motrice d'un véhicule automobile,
- selon lequel la démultiplication d'une boîte de vitesses automatique est déterminée automatiquement en fonction d'au moins la position de pédale d'accélérateur ou d'une grandeur remplaçant celle-ci et de la vitesse du véhicule automobile, à l'aide de tables caractéristiques rangées en mémoire, et
- selon lequel un circuit de logique floue (7) analyse des signaux caractérisant l'état de conduite du véhicule automobile et produit par suite des signaux de commande au moyen desquels la démultiplication de boîte de vitesses est déterminée, **caractérisé**
- **en ce que** le circuit de logique floue (7) évalue un souhait de couple de freinage émis par le conducteur du véhicule automobile et exécute une modification de la démultiplication de boîte de vitesses qui assiste le couple de freinage du dispositif de freinage (22),
- **en ce que** le circuit de logique floue (7) évalue à nouveau le souhait de couple de freinage du conducteur après la modification de la démultiplication de boîte de vitesses et, conformément au résultat de l'évaluation, adapte éventuellement à nouveau la démultiplication de boîte de vitesses au souhait de couple de freinage et
- **en ce qu'**un souhait de couple de freinage émis par le conducteur du véhicule automobile n'est évalué qu'après que la pédale de frein (11) a été actionnée pendant une durée préfixée.

2. Procédé suivant la revendication 1, **caractérisé en ce que** le circuit de logique floue (7) évalue à nouveau le souhait de couple de freinage du conducteur après la modification renouvelée de la démultiplication de boîte de vitesses et modifie la démultiplication de boîte de vitesses pas à pas jusqu'à ce que le couple de freinage demandé ait été atteint.

3. Procédé suivant l'une des revendications précédentes, **caractérisé en ce que** le circuit de logique floue détermine la démultiplication de boîte de vitesses, assistant la puissance de freinage, en parallèle à un calcul de la démultiplication de boîte de vitesse qui est basé sur des tables caractéristiques et **en ce qu'**il utilise la démultiplication effectivement présente dans la boîte de vitesse pour calculer la modification de démultiplication.

4. Procédé suivant l'une des revendications 1 ou 2, **caractérisé en ce que** le circuit de logique floue détermine la démultiplication de boîte de vitesses, assistant le couple de freinage, en parallèle à un calcul de la démultiplication de boîte de vitesse qui est basé sur des tables caractéristiques et **en ce qu'**il règle la démultiplication de boîte de vitesses déterminée statiquement lorsque celle-ci fournit un rapport de démultiplication plus grand.

5. Procédé suivant l'une des revendications précédentes, **caractérisé en ce que** le circuit de logique floue calcule le souhait de couple de freinage du conducteur à partir de grandeurs d'état de conduite du véhicule automobile qui sont déduites.

6. Procédé suivant l'une des revendications précédentes, **caractérisé**
- **en ce qu'**un signal de commande est produit, et utilisé en tant que seuil de vitesse de rotation pour une comparaison avec la vitesse de rotation de turbine de la boîte de vitesses automatique, par le circuit logique de logique floue et
- **en ce que**, dans le cas d'une vitesse de rotation de turbine chutant au-dessous de ce seuil de vitesse de rotation, une modification de la démultiplication de boîte de vitesses qui assiste l'action de freinage est imposée.

7. Procédé suivant l'une des revendications 1 à 5, **caractérisé**
- en en ce qu'un signal de commande est produit, et utilisé en tant que seuil de vitesse de rotation pour une comparaison avec la vitesse de rotation de sortie de la boîte de vitesses automatique, par le circuit de logique floue et
- en ce que, dans le cas d'une vitesse de rotation de sortie qui chute au-dessous de ce seuil de vitesse de rotation, une modification de la démultiplication de boîte de vitesses qui assiste l'action de freinage est imposée.

8. Procédé suivant l'une des revendications précédentes, **caractérisé en ce que** le rapport de démultiplication assistant le couple de freinage reste maintenu jusqu'à ce que des conditions de sortie préfixées soient remplies.

9. Commande de ligne motrice d'un véhicule automobile, au moyen de laquelle la démultiplication d'une boîte de vitesses automatique (5) est déterminée automatiquement en fonction au moins de la position de pédale d'accélérateur et de la vitesse du véhicule automobile, à l'aide de tables caractéristiques rangées en mémoire, et qui comprend un circuit de logique floue (7) au moyen duquel différents états de conduite et signaux caractérisant l'état de charge du véhicule automobile sont analysés et, par suite, des signaux de commande sont produits, au moyen desquels la démultiplication de boîte de vitesses est déterminée, **caractérisée**
- **en ce que** le circuit de logique floue (7) est relié par une ligne de signal (25) à un dispositif de freinage (22) du véhicule automobile et
- **en ce qu'**au moyen du circuit de logique floue (7), un souhait de couple de freinage du conducteur, transmis par le dispositif de freinage (22), est analysé et une modification de la démultiplication de boîte de vitesses assistant l'action de freinage du dispositif de freinage (22) est exécutée après que la pédale de frein (11) a été actionnée pendant une durée préfixée.
